# EUROPÄISCHE PATENTSCHRIFT

(11) **EP 3 491 910 B1**
(45) Veröffentlichungstag und Bekanntmachung des Hinweises auf die Patenterteilung: **11.05.2022**
(21) Anmeldenummer: 18020622.9
(22) Anmeldetag: 28.11.2018
(51) Int. Cl.: A01G 9/02

(54) **HOCHBEET ALS 6-ECKPYRAMIDE**
RAISED BED AS HEXAGONAL PYRAMIDS
PLATE-BANDE EN TANT QUE PYRAMIDE À BASE HEXAGONALE

(43) Veröffentlichungstag der Anmeldung: 05.06.2019
(73) Patentinhaber: Sühlfleisch, Peter, 99885 Luisenthal (DE); Sawicka-Sühlfleisch, Patrycja, 99885 Luisenthal (DE)
(72) Erfinder: Sühlfleisch, Peter, 99885 Luisenthal (DE); Sawicka-Sühlfleisch, Patrycja, 99885 Luisenthal (DE)
(74) Vertreter: Weidner Stern Jeschke

(56) Entgegenhaltungen:
- FR-A- 888 854
- FR-A1- 2 850 528
- GB-A- 957 455
- US-A- 440 141
- US-B1- 7 712 255

## Beschreibung

### 2. Stand der Technik und deren Mängel

Im bisherigen Hochbeetbau wird eine horizontal bebaubare Pflanzfläche in die Höhe gesetzt um ein angenehmes Gärtnern zu ermöglichen. Um eine angenehme Höhe zu erreichen bedarf es einer großen Menge an Pflanzerde. Um Erdreich zu sparen, werden Hochbeete oft mit Untergestellen konstruiert. Diese Hochbeete sind allseitig der Umgebungstemperatur ausgesetzt und werden somit frostempfindlicher. Eine Vergrößerung der nutzbaren Fläche und somit auch der Wirtschaftlichkeit des Hochbeetes wird bei beiden Konstruktionsmethoden nicht erreicht. Eine Vergrößerung der Nutzfläche wird bei senkrechter Bepflanzung erreicht. Jedoch kommt es bei senkrechter Bepflanzung zu Einschränkungen der Gemüsesortenwahl und es kommt zum Herausfallen von Erdreich, speziell beim Erntevorgang und bei Neubepflanzung, da der Wurzelstrang des vorhergehenden Gewächses entfernt werden muss. Eine optimale Nutzung des Sonnenlichtes und der Sonnenwärme ist bei senkrechter Bepflanzung nicht gegeben, da sich durch die Ekliptik der Sonne verschattete Flächen ergeben. Bei einer Mehrfachbestückung einer Fläche mit Hochbeeten muss auf größeren Abstand geachtet werden, um eine gegenseitige Beschattung zu vermeiden. Die angenehme Arbeitshöhe im konventionellen Hochbeetbau liegt in einem engen Bereich. Der Gärtner muss sich auch hier immer auf einer gleichbleibenden Höhe über das Beet beugen, was nicht dem kinästhetischen Arbeiten entspricht.

In der US 7 712 255 B1 ist ein mehrstöckiger Pflanzbehälter offenbart, bei dem jeder Durchmesser der übereinander gestapelten Pflanzgefäße konstant ist und die Durchmesser jeweils beim Übergang zum nächsten Pflanzgefäß nach oben hin abnehmen, wobei das darüber angeordnete Pflanzgefäß jeweils auf Querbalken in den inneren Ecken des jeweiligen darunterliegenden Pflanzgefäßes aufliegt. Ebenso sind Pflanzbehälter mit übereinander angeordneten Pflanzgefäßen, welche jeweils einen konstanten Durchmesser und somit gerade Seitenwände aufweisen, aus der GB 957 455 A und der US 440 141 A bekannt.

### 3. Der Erfindung liegen folgende Aufgaben zugrunde

Durch die pyramidenförmige Konstruktion ergibt sich eine Verringerung der Pflanzerde um 2/3. Durch die nach außen geneigten Baurahmen ergibt sich eine Verdoppelung der Nutzfläche. Durch ein Verdrehen der Baurahmen zum Mittelpunkt wird ein gegenseitiges Beschatten der Bepflanzung von oben nach unten vermieden. Durch die Pyramidenform ergibt sich eine optimale Einwirkung des Sonnenlichtes und der Sonnenwärme. Durch die Konstruktion ergibt sich das Gärtnern an einer schiefen Ebene, was für einen kinästhetischen Bewegungsablauf förderlich ist. Durch die Zerlegbarkeit und das geringe Gewicht ist ein Transport zu schwer zugänglichen Stellen ohne Hilfsmittel gesichert. Bei einer Anpassung an verschiedene Größen und Höhen des Hochbeetes, ist es möglich, bis auf Augenhöhe zu gärtnern. Durch die 6-Eck Konstruktion ergibt sich wirtschaftliches Gärtnern auf engstem Raum, da neutrale Flächen wie Gehwege minimalisiert werden. Bei der Parkettierung einer größeren Fläche mit mehreren Hochbeeten sind Zwischenräume (Gehwege) erforderlich. Bei einer 6-Eck Parkettierung ist der Anteil an Gehweg - Flächen immer geringer als bei einer Kreis-, 4-Eck- oder 5-Eck- Parkettierung (Quelle Buch: Quadrivium - Die vier klassischen freien Künste: Arithmetik, Geometrie, Musik und Astronomie erschienen 2016 im Librero Verlag, Seite 98-99). Durch die Pyramidenform wird bei einer Parkettierung ein gegenseitiges Beschatten minimiert. Die 6-Eck Parkettierung ermöglicht somit optimalste Nutzung der Standortfläche, sie unterstützt das Gärtnern auf engstem Raum.

Durch die Urbanisierung erfolgt eine weit fortschreitende Bodenversiegelung. Die Möglichkeit zur Grünflächennutzung wird immer geringer, Gemüseanbau wegen des hohen Gewichtes fast unmöglich.

Durch Verringerung des Gewichtes bei gleichzeitiger Erhöhung der Anbaufläche in Kombination, wird ein effizientes bewirtschaften von Kleinstgärten, Terrassen, auf Balkonen z.B. auch in Mehrfamilienhäusern in oberen Etagen ermöglicht. Durch Verringerung des Gewichtes wird eine Bebauung in größerer Stückzahl auf statisch begrenzt belastbaren Bauteilen, wie Garagendächer, Flachdächer öffentlicher Gebäude, Parkdecks und allgemein der Stadtgartengestaltung ermöglicht.

### 4. Erfinderische Lösung

Gelöst wird die Aufgabe durch ein Hochbeet gemäß Anspruch

Die Erfindung betrifft ein Hochbeet, deren Bauteile aus einem leichten, nachhaltigen und leicht zu bearbeitbaren Material, bevorzugt Holz, besteht. Die einzelnen Fundamentkranzsegmente (2) und die Baurahmensegmente (4) sind an den Eckpunkten im Konstruktionsbeispiel mit Lochplatten verbunden. Die Verbindung (5) kann aber auch durch Verklammern, Verschrauben, durch Winkel oder ähnliches erfolgen. Die Erfindung betrifft ein Hochbeet, in welchem sechseckige Baurahmen (3) in einer Vielzahl vertikal angeordnet werden. Zu Unterst sitzt ein Baurahmen (3) auf einem Fundamentkranz (1) auf, der zum einen als Auflager dient, zum anderen die zu bebauende Grundfläche begrenzt. Der Fundamentkranz (1) setzt sich aus 6 Fundamentsegmenten (2) zusammen. Nach der Befüllung mit Erdreich wird der nächste Baurahmen (3) aufgesetzt. Der nächste Baurahmen (3) wird im Durchmesser so verringert, dass die Oberkanten der Baurahmen (3), wenn man sie in der Seitenansicht sieht, sich in einem spitzen Winkel, bevorzugt im 60-Gradwinkel zum Mittelpunkt neigt. Weiterhin wird der Baurahmen (3) mit einer Verdrehung zum Mittelpunkt in horizontaler Richtung, bevorzugt im 60-Gradwinkel, angeordnet. Nach dieser Vorgehensweise werden alle weiteren Baurahmen (3) angeordnet bis die gewünschte Höhe erreicht ist. Die einzelnen Baurahmen (3) bestehen aus 6 Segmenten mit gleicher Länge, an den Verbindungpunkten mit einem Schifterschnitt (6) versehen. Daraus ergibt sich eine Vergrößerung der zu bepflanzenden Nutzfläche nach oben und eine Verringerung des Erdreiches nach unten. Durch Verringerung des Durchmessers der Baurahmen (3) in vertikaler Richtung ergibt sich im Gesamtbild eine gleichseitige Pyramidenkonstruktion, was das Arbeiten auf verschiedenen Höhenstufen an einer schiefen Ebene ermöglicht und somit auch den kinästhetischen Bewegungsablauf fördert.

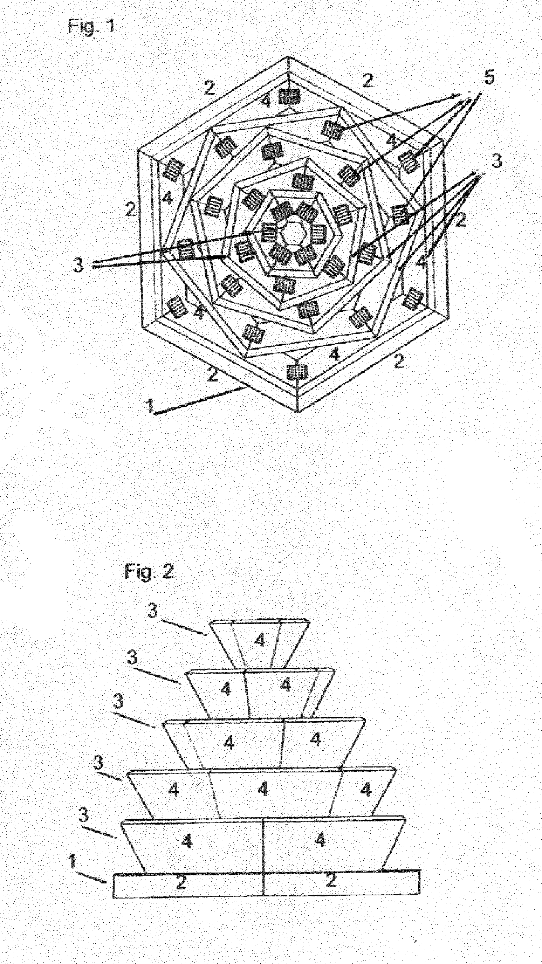

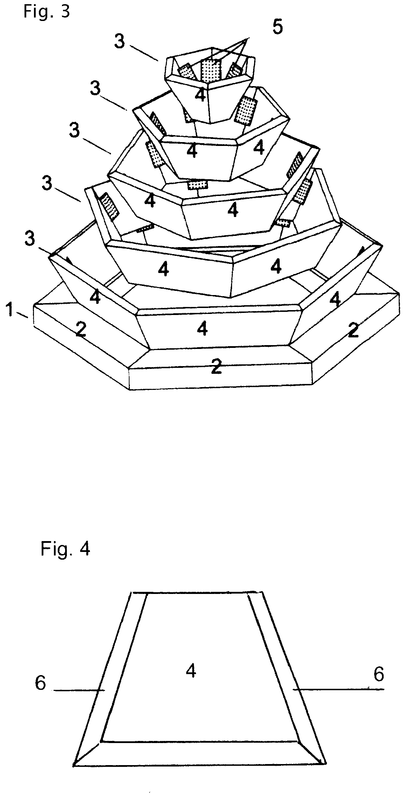

## Patentansprüche

1. Hochbeet als 6-Eckpyramide, wobei mindestens zwei 6-eckige Baurahmen (3) über einem 6-eckigen Fundamentkranz (1) vertikal angeordnet sind,
wobei die 6-eckigen Baurahmen (3) aus 6 gleichen Baurahmensegmente (4) bestehen, die an Eckpunkten mit einer Verbindungsvorrichtung, Winkel, Lochplatten oder Ähnliches miteinander verbunden sind, **dadurch gekennzeichnet, dass**
die einzelnen Baurahmensegmente (4) beidseitig mit einem Schifterschnitt (6) versehen sind und sich die Durchmesser der einzelnen Baurahmen (3) in vertikaler Richtung nach unten verjüngen.

2. Hochbeet als 6-Eckpyramide nach Anspruch 1, **dadurch gekennzeichnet, dass** der 6-eckige Fundamentkranz (1) aus 6 gleichen Fundamentkranzsegmenten (2) besteht, die an den Eckpunkten mit einer Verbindungsvorrichtung, Winkel, Lochplatten oder Ähnliches miteinander verbunden sind.

3. Hochbeet als 6-Eckpyramide nach Anspruch 1, **dadurch gekennzeichnet, dass** nach dem Verbinden der Baurahmensegmente (4) sich ein Baurahmen (3) mit einem Neigungswinkel, bevorzugt 30-Gradwinkel, zum Mittelpunkt ergibt.

4. Hochbeet als 6-Eckpyramide nach Anspruch 1 und 3, **dadurch gekennzeichnet, dass** sich die einzelnen Baurahmen (3) horizontal zum Mittelpunkt, bevorzugt um 60-Gradwinkel, verdrehen.

5. Hochbeet als 6-Eckpyramide nach Anspruch 1 und 3, **dadurch gekennzeichnet, dass** sich bei gleichzeitiger Verringerung des Volumens die Oberfläche erhöht.

## Claims

1. Raised bed as hexagonal pyramids, wherein at least two hexagonal structural frames (3) are arranged vertically above a hexagonal foundation collar (1),
wherein the hexagonal structural frames (3) consist of 6 identical structural frame segments (4), which are connected at corner points using a connection device, bracket, perforated plate, or the like, **characterised in that**
the individual structural frame segments (4) are provided on both sides with a compound cut (6) and the diameters of the individual structural frames (3) taper downwards in the vertical direction.

2. Raised bed as hexagonal pyramids according to claim 1, **characterised in that** the hexagonal foundation collar (1) consists of 6 identical foundation collar segments (2), which at the corner points are connected to one another using a connection device, bracket, perforated plate or the like.

3. Raised bed as hexagonal pyramids according to claim 1, **characterised in that**, once the structural frame segments (4) have been connected, a structural frame (3) with an angle of inclination, preferably an angle of 30 degrees, to the centre point is produced.

4. Raised bed as hexagonal pyramids according to claim 1 and 3, **characterised in that** the individual structural frames (3) rotate horizontally to the centre point, preferably through an angle of 60 degrees.

5. Raised bed as hexagonal pyramids according to claim 1 and 3, **characterised in that** the surface area increases with a simultaneous reduction in volume.

## Revendications

1. Plate-bande surélevée en tant que pyramide à base hexagonale, dans laquelle au moins deux châssis hexagonaux (3) sont disposés verticalement par-dessus une base en couronne hexagonale (1),
dans laquelle les châssis hexagonaux (3) sont constitués de 6 segments de châssis (4) identiques, qui sont reliés les uns aux autres sur des points de coin par un dispositif de liaison, équerres, plaques trouées ou similaire, **caractérisée en ce que**
les divers segments de châssis (4) sont pourvus de part et d'autre d'une coupe en empannon (6) et les diamètres des divers châssis (3) se rétrécissent vers le bas dans la direction verticale.

2. Plate-bande surélevée en tant que pyramide à base hexagonale selon la revendication 1, **caractérisée en ce que** la base en couronne hexagonale (1) est constituée de 6 segments de base en couronne (2) identiques, qui sont reliés les uns aux autres sur les points d'angle par un dispositif de liaison, équerres, plaques trouées ou similaire.

3. Plate-bande surélevée en tant que pyramide à base hexagonale selon la revendication 1, **caractérisée en ce qu'**après la liaison des segments de châssis (4), un châssis (3) en résulte avec un angle d'inclinaison, de manière préférée un angle de 30 degrés, par rapport au centre.

4. Plate-bande surélevée en tant que pyramide à base hexagonale selon la revendication 1 et la revendication 3, **caractérisée en ce que** les divers châssis (3) sont tournés horizontalement par rapport au centre, de manière préférée d'un angle de 60 degrés.

5. Plate-bande surélevée en tant que pyramide à base hexagonale selon la revendication 1 et la revendication 3, **caractérisée en ce que** la surface augmente alors que le volume se réduit simultanément.
